# EUROPEAN PATENT SPECIFICATION

(11) **EP 3 025 220 B1**
(45) Date of publication and mention of the grant of the patent: **08.05.2019**
(21) Application number: 13889767.3
(22) Date of filing: 26.07.2013
(51) Int. Cl.: G06F 1/16, G06F 3/041, H02N 2/04, G06F 3/01, H04R 1/02, G02F 1/1333

(54) **COMPUTING DEVICE WITH VIBRATION TRANSDUCER**
RECHNERVORRICHTUNG MIT SCHWINGUNGSWANDLER
DISPOSITIF INFORMATIQUE POURVU D'UN TRANSDUCTEUR DE VIBRATION

(43) Date of publication of application: 01.06.2016
(73) Proprietor: Hewlett-Packard Development Company, L.P., Houston, Texas 77070 (US)
(72) Inventor: JANIK, Craig, Cupertino, California 95014 (US)
(74) Representative: HGF Limited
(86) International application number: PCT/US2013/052198
(87) International publication number: WO 2015/012855

(56) References cited:
- KR-A- 20130 017 066
- US-A1- 2013 034 252
- US-A1- 2013 064 401
- US-B1- 7 639 826

## Description

### BACKGROUND

A transducer is a device that converts a signal in one energy form to another energy form. The energy forms may include, for example, electrical, mechanical, electromagnetic, chemical, acoustic, and/or thermal energy.

One particular type of transducer is a vibration transducer. A vibration transducer converts electrical energy from a power source (e.g., a battery) into vibrational energy. In some devices, the vibration transducer is attached to a device surface to make the surface vibrate. This may be accomplished by moving a mass (e.g., a magnet) within the transducer cyclically or in opposing directions.

Reference is made to US7,639,826B1, which discloses a method of making a bending wave panel loudspeaker, comprising rigidly coupling a lever to a panel edge or marginal portion such that the lever extends at an angle to the plane of the panel, coupling a bending wave exciter to the lever whereby bending wave energy is coupled to the panel to produce an acoustic output when the exciter is fed with a signal and supporting the panel on a suspension positioned outboard of the lever. There is also disclosed a bending wave panel-form loudspeaker having a lever rigidly coupled to a marginal portion or edge of the panel, a vibration exciter coupled to the lever to apply bending wave energy to the panel to produce an acoustic output and a panel suspension positioned outboard of the lever. There is also disclosed a small electronic device, e.g. a mobile telephone or PDA, having a display screen, and a transparent protective cover over the display screen, wherein the transparent protective cover is a loudspeaker as described above.

### BRIEF DESCRIPTION OF THE DRAWINGS

The invention is as set out in the appended independent claims. Preferred embodiments of the invention are set out in the appended dependent claims. Examples are described in the following detailed description and in reference to the drawings, in which:
Fig. 1 depicts an example vibration transducer in accordance with an implementation of the present disclosure;
Fig. 2 depicts an example computing device including the vibration transducer of Fig. 1 in accordance with an implementation of the present disclosure;
Fig. 3 depicts an example computing device including the vibration transducer of Fig. 1 with supporting walls in accordance with another implementation of the present disclosure;
Fig. 4 depicts an example vibration transducer in accordance with another implementation of the present disclosure; and
Fig. 5 depicts an example computing device including the vibration transducer of Fig. 4 in accordance with an implementation of the present disclosure.

### DETAILED DESCRIPTION

In various computing devices such as tablets and smartphones, a vibration transducer is attached to the computing device cover glass to provide functions such as haptic/tactile feedback and sound/audible reproduction. While these functions appeal to consumers, designers of these computing devices are often focused on making the devices as small as possible, and a common constraint with respect to including a vibration transducer within the computing device is the conventional placement of the vibration transducer within the computing device, and further the minimum distance requirement between the vibration transducer and the frame to which the cover glass is bonded.

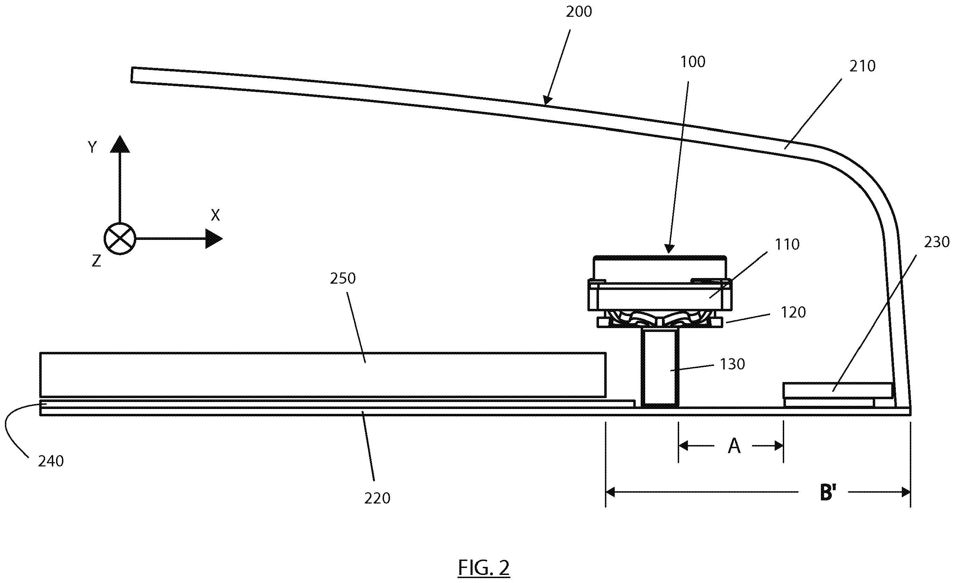

More specifically, the vibration transducer is generally placed in between a liquid crystal display (LCD) component and the frame to which the cover glass is bonded, with the vibration transducer base directly coupling with the cover glass via a thin layer of very high bond (VHB) tape or another adhesive material. In addition, the vibration transducer is placed a minimum distance from the frame to which the cover glass is bonded. If this minimum distance is not adhered to and the vibration transducer is placed closer to the frame, the transfer of energy from the vibration transducer to the cover glass is inhibited because of the stiffness of the glass in that region. This overall arrangement tends to increase the computing device size in the X-direction (see coordinates in Fig. 2), which thereby opposes the designer's goal of making the device as small as possible.

Aspects of the present disclosure attempt to address at least the above by providing an elevated vibration transducer that allows at least a portion of the vibration transducer frame and/or transducer base to extend over the LCD component and/or a touch sensor component, thereby potentially reducing the computing device size in the X-direction while at the same time adhering to the minimum distance requirement with respect to the frame to which the cover glass is bonded. Consequently, the transfer of energy from the vibration transducer to the cover glass is not diminished at the expense of reducing the computing device size in the X-direction. This novel and previously unforeseen advancement is described in detail below with reference to various examples and figures.

In particular, in one example in accordance with the present disclosure, a computing device is provided. The computing device comprises a cover glass, a touch sensor component coupled to the cover glass, a LCD coupled to the touch sensor component, and a vibration transducer coupled to the cover glass to apply vibrations to the cover glass. The vibration transducer includes a transducer frame, a transducer base coupled to the transducer frame, and an extended pedestal coupled to the transducer base. The extended pedestal elevates the transducer base and transducer frame, and the extended pedestal is positioned adjacent to the LCD such that at least a portion of the transducer frame extends over the LCD and/or the touch sensor component.

In another example in accordance with the present disclosure, a vibration transducer is provided. The vibration transducer comprises a transducer frame, a transducer base coupled to the transducer frame, and an extended pedestal coupled to the transducer base. The extended pedestal elevates the transducer frame at least 5 mm from a surface when the vibration transducer is positioned on the surface, and the vibration transducer is positionable such that at least a portion of the transducer frame extends over at least one computing device component (e.g., a LCD and/or a touch sensor component) other than the surface when the vibration transducer is positioned on the surface.

In yet another example of the present disclosure, another computing device is provided. The computing device comprises an outer enclosure, a first supporting wall coupled to the outer enclosure, a second supporting wall coupled to the outer enclosure, a cover glass coupled to the outer enclosure, a LCD, and a vibration transducer coupled to the cover glass to apply vibrations to the cover glass. The vibration transducer includes a transducer frame, a transducer base coupled to the transducer frame, and an extended pedestal coupled to the transducer base. The extended pedestal is positioned adjacent to the LCD such that at least a portion of the transducer frame extends over the LCD. Furthermore, at least a portion of the first supporting wall is positioned on a first side of the vibration transducer, and at least a portion of the second supporting wall is positioned on a second side of the vibration transducer.

As used herein, the term "vibration transducer" should be generally understood as meaning a device that converts electrical energy from a power source into vibrations. As used herein, the term "extended pedestal" should be generally understood as meaning a stand or platform that, when coupled to the vibration transducer, elevate or raises the vibration transducer above a surface.

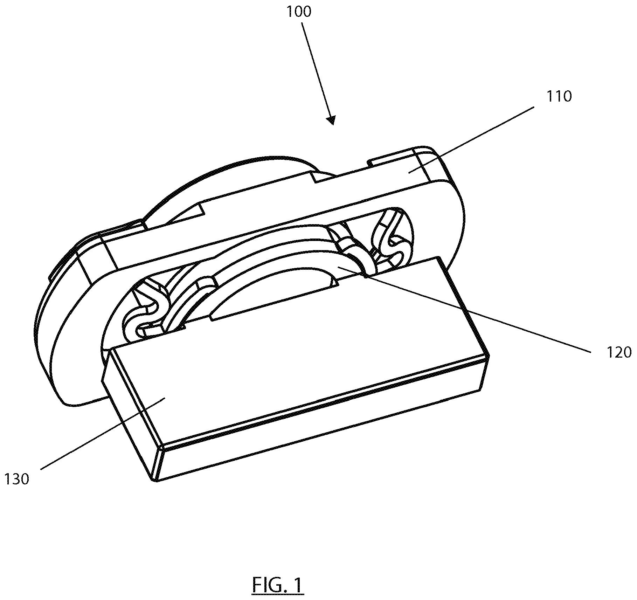

Fig. 1 depicts an example vibration transducer 100 in accordance with an implementation of the present disclosure. The vibration transducer 100 comprises a transducer frame 110, a transducer base 120 coupled to the transducer frame 110, and an extended pedestal 130 coupled to the transducer base 120. It should be readily apparent that the vibration transducer 100 is a generalized illustration and that other elements may be added or existing elements may be removed, modified, or rearranged without departing from the scope of the present disclosure. For example, in addition to the components specified above, the vibration transducer 100 may also include other components such as a coil housing, a solder pad, a flexure, and/or a magnet, and only a few components are shown for the sake of clarity and brevity.

As described further below with respect to Fig. 2, the extended pedestal 130 elevates the transducer frame 110 and transducer base 120 from a surface when the vibration transducer is positioned on the surface. For example, the extended pedestal 130 may elevate the transducer frame 110 and/or transducer base 120 5-15mm above the surface. In the example shown in Fig. 1, the extended pedestal measures 30mm x 10mm x 5mm. Among other things, this enables at least a portion of the transducer frame 110 and/or transducer base 120 to extend over a computing device component (other than the surface) such as a LCD and/or touch sensor component. This differs from conventional approaches where the vibration transducer is not elevated and therefore is positioned adjacent to the LCD and/or touch sensor and does not extend over the LCD or touch sensor.

In an example, the above-mentioned surface may be a cover glass of a computing device to which the vibration transducer 100 is coupled to via adhesive or another coupling mechanism. The extended pedestal 130 may elevate the transducer frame 110 and/or transducer base 120 above the cover glass. In particular, in one implementation, the extended pedestal 130 may elevate the transducer frame 110 and/or transducer base 120 at least 5 mm above the cover glass. In another implementation, the extended pedestal 130 may elevate the transducer frame 110 and/or transducer base 120 at least 10 mm above the cover glass. This differs from conventional approaches where the transducer frame 110 is not elevated from the cover glass beyond perhaps the amount necessary to comply with the minimum frame offset requirement for the vibration transducer. Hence, the extended pedestal 130 of the present disclosure when coupled to the transducer base 120 offsets the transducer frame 110 beyond the minimum frame offset for the vibration transducer 100.

It should be understood that while the extended pedestal 130 in Fig. 1 is depicted as a cuboid, other shapes are also possible in other implementations. For example, the extended pedestal 130 may take the form of a cylinder, cube, hexagonal prism, cone, triangular prism, or another shape. In addition, while the extended pedestal 130 in Fig. 1 is depicted as a single element, in some implementations, the extended pedestal 130 may comprise multiple elements. For example, the extended pedestal 130 may comprise two slimmer cuboids located close to one another. Alternatively, the extended pedestal 130 may take the form of four slim cuboids positioned similar to legs of a table.

Turning now to materials, it should be understood that the extended platform 130 may either be a solid piece of material or a hollow piece of material, and further that the extended pedestal 130 may be formed of at least one material including, but not limited to, plastic, aluminum, steel, iron, ceramic, rubber, fiberglass, or the like.

Fig. 2 depicts an example computing device 200 including the vibration transducer 100 of Fig. 1 in accordance with an implementation of the present disclosure. The computing device 200 may be, for example, a tablet, smartphone, laptop, display, retail point of sale device, calculator, scientific instrument, gaming device, an all-in-one desktop computer, and/or any device that incorporates a touch input system. The vibration transducer 100 may be positioned within the computing device to provide at least one of tactile vibrations and audible vibrations.

The computing device 200 may include an outer enclosure 210, a cover glass 220, and a frame 230 to which the cover glass is bonded to via adhesive tape or another bonding material. A touch sensor component 240 is coupled to the cover glass 220, and a LCD 250 is coupled to the touch sensor component 240. In various examples, the touch sensor component 240 may be a projected capacitive sensor (PCT) formed of glass and/or plastic. In addition, in various examples, the LCD 250 may utilize two sheets of polarizing material with a liquid crystal solution between them, where an electric current passed through the liquid causes the crystals to align so that light cannot pass through them, thereby creating a "shutter" effect of either allowing light to pass through or blocking the light.

The vibration transducer 100 is coupled to the cover glass 220 to apply vibrations to the cover glass 220 when the vibration transducer 100 is activated. As mentioned above with respect to Fig. 1, the vibration transducer 220 includes a transducer frame 110, a transducer base 120 coupled to the transducer frame 110, and an extended pedestal 130 coupled to the transducer base 120. The extended pedestal 130 elevates the transducer base 120 and the transducer frame 110. Due to the placement of the extended pedestal 130 adjacent to the LCD 250 and touch sensor component 240, at least a portion of the transducer frame 110 extends over the LCD 250 and touch sensor component 240. More specifically, the narrow, extended pedestal 120 allows placement of the transducer 100 closer to the LCD 250 and touch sensor component 240 because a portion of the transducer 100 nests above the LCD 250 and touch sensor component 240. Furthermore, the arrangement shown in Fig. 2 complies with the minimum distance requirement between the vibration transducer 100 and the frame 230 to which the cover glass is bonded (shown as distance "A" in Fig. 2 - e.g., 10mm).

Hence, because (i) the elevated vibration transducer 100 is positioned closer to the LCD 250 and touch sensor component 240 when compared to conventional designs due to the vibration transducer 100 nesting above these components, and because (ii) the minimum distance requirement between the vibration transducer 100 and the frame 230 is measured from the extended pedestal 120 as opposed to the transducer frame 110 or transducer base 120 (as is the case with conventional designs), the overall computing device 210 measurement in the X-direction may be reduced when compared to conventional designs. Stated differently, although the "A" dimension in Fig. 2 is the same as in conventional designs, the extended pedestal 120 provides for less distance from the center line of the vibration transducer 100 to the near edge of the frame 230. The net result is that dimension B' shown in FIG. 2 is significantly shorter than the B dimension associated with conventional designs, thereby resulting in an overall decrease in produce size.

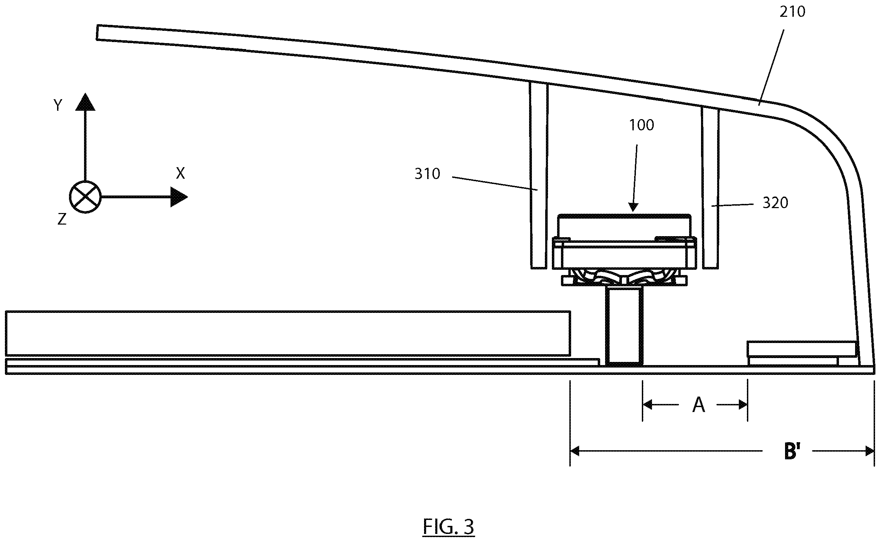

Fig. 3 depicts an example computing device 300 including the vibration transducer 100 of Fig. 1 with supporting walls 310/320 in accordance with another implementation of the present disclosure. In particular, Fig. 3 is the same as Fig. 2, but in this implementation, a first supporting wall 310 and a second supporting wall 320 are coupled to the outer enclosure 210, and at least a portion of the first supporting wall 310 is positioned on a first side of the vibration transducer 100 without making contact with the vibration transducer 100, and at least a portion of the second supporting wall 320 is positioned on a second side of the vibration transducer 100 without making contact with the vibration transducer 100. The two support walls 310/320 may be molded into the outer enclosure 210 or otherwise coupled to the outer enclosure 210. These supporting walls 310/320 may shroud but not make contact with the vibration transducer 100 under normal operation. In the event of an impulse load in the X direction to the computing device, the support walls 310/320 may limit the displacement of the vibration transducer 100. Such an impulse load may be imparted on the computing device if the device was dropped onto a hard surface substantially in the X or -X direction. Hence, the supporting walls 310/320 help reduce the likelihood of transducer breakage/displacement in the event the computing device is dropped.

While the above describes the supporting walls 310/320 as not making contact with the vibration transducer 100, in some implementations, the supporting walls 310/320 do make contact with the vibration transducer. Further, while the supporting walls 310/320 are shown as rectangular shaped in Fig. 3, it should be understood that other shapes such as triangular or square shaped supporting walls 310/320 may be utilized in some implementations.

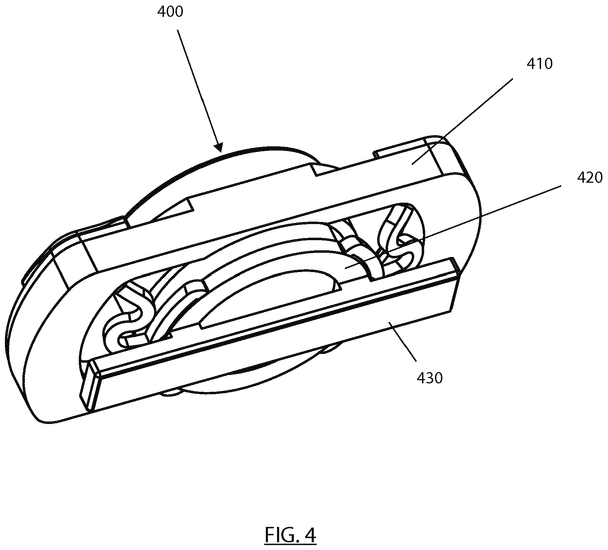

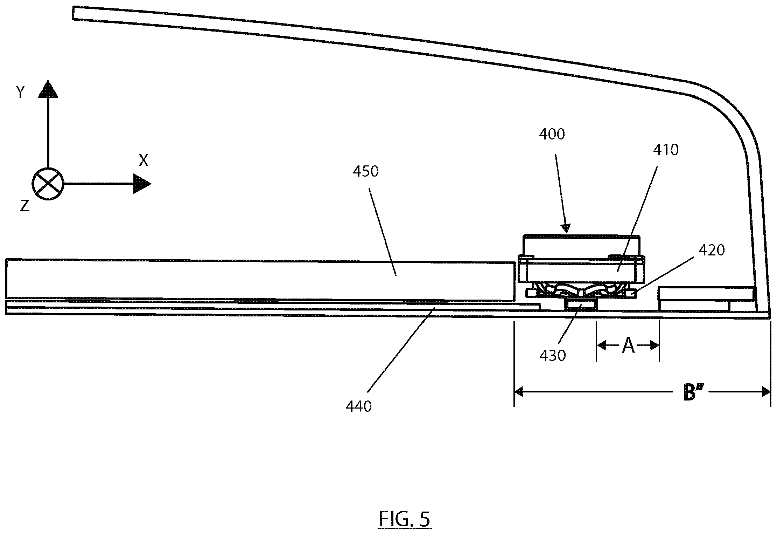

Fig. 4 depicts an example vibration transducer 400 in accordance with another implementation of the present disclosure. In particular, the vibration transducer 400 in Fig. 4 is similar to the vibration transducer 100 in Fig. 1 insofar as the vibration transducer 400 includes a transducer frame 410, transducer base 420, and extended pedestal 430. However, in Fig. 4, the extended pedestal 430 does not elevate the transducer frame 410 and transducer base 420 as much as the extended pedestal does in Fig. 1. More specifically, and as shown in Fig. 5, the extended pedestal 430 elevates the transducer frame 410 and transducer base 420 enough that both extend over the touch sensor component 440, but not enough for both to extend over the LCD 450. In one example, the extended pedestal 410 may elevate the transducer frame 410 and/or transducer base 420 between 2-8mm above the cover glass surface. Because the vibration transducer 400 in Fig. 5 is elevated above the touch sensor component 440 but not the LCD 430, the X-direction reduction when compared to conventional designs is not as much as shown in Fig. 2, but still a reduction when compared to conventional designs. Hence, the dimension B" shown in Fig. 5 falls in between the B' dimension shown in Fig. 2 and a typical B dimension in conventional designs.

While Fig. 5 depicts that neither the transducer frame 410 nor the transducer base 420 extend over the LCD 430, it should be understood that in some implementations, the dimension of the extended pedestal 430 is such that the transducer frame 410 extends over the LCD 430 while the transducer base 420 does not extend over the LCD 430 and only extends over the touch sensor component 440.

The foregoing describes a novel and previously unforeseen approach to reduce computing device size when a vibration transducer is included therein. As described in detail above, the narrow, extended pedestal allows placement of the vibration transducer closer to the LCD and/or touch sensor component because a portion of the vibration transducer nests above the LCD and/or touch sensor component. And although the "A" dimension is the same as in conventional designs, the narrower base provides for less distance from the center line of the vibration transducer to the near edge of the frame. The net result is that dimension B' or B" (shown in Figs. 2 and 5) is significantly shorter than the B dimension associated with conventional designs, resulting in an overall decrease in produce size in the X-direction.

## Claims

1. A computing device (200), comprising:
a cover glass (220);
a touch sensor component (240) coupled to the cover glass;
a liquid crystal display 'LCD' (250) coupled to the touch sensor component; and
a vibration transducer (100) coupled to the cover glass to apply vibrations to the cover glass, wherein the vibration transducer includes
a transducer frame (110),
a transducer base (120) coupled to the transducer frame,
an extended pedestal (130) coupled to the transducer base,
wherein the extended pedestal elevates the transducer base and transducer frame from the cover glass, and wherein the extended pedestal is positioned adjacent to the LCD such that at least a portion of the transducer frame and/or the transducer base extends over the LCD and/or the touch sensor component;
an outer enclosure (210) to which the cover glass is coupled; and
a first supporting wall (310) coupled to the outer enclosure, a second supporting wall (320) coupled to the outer enclosure;
wherein at least a portion of the first supporting wall is positioned on a first side of the vibration transducer, and at least a portion of the second supporting wall is positioned on a second side of the vibration transducer; and
wherein the first supporting wall and the second supporting wall limit the displacement of the vibration transducer in the event of an impulse load on the computing device.

2. The computing device of claim 1, wherein the extended pedestal elevates the transducer frame at least 5 mm from the cover glass.

3. The computing device of claim 1, wherein the extended pedestal elevates the transducer frame at least 10 mm from the cover glass.

4. The computing device of claim 1, wherein the extended pedestal is positioned adjacent to the LCD and touch sensor component such that at least a portion of the transducer frame extends over the touch sensor component and the LCD.

5. The computing device of claim 1, wherein the transducer frame elevation from the cover glass exceeds a minimum frame offset for the vibration transducer.

6. The computing device of claim 1, wherein the first supporting wall and the second supporting wall do not make contact with the vibration transducer.

7. The computing device of claim 1, wherein the vibrations comprise at least one of tactile vibrations and audible vibrations.

## Patentansprüche

1. Rechenvorrichtung (200), Folgendes umfassend:
ein Abdeckglas (220);
eine Berührungssensorkomponente (240), die mit dem Abdeckglas gekoppelt ist;
eine mit der Berührungssensorkomponente gekoppelte Flüssigkristallanzeige "LCD" (250); und
einen Schwingungswandler (100), der mit dem Abdeckglas gekoppelt ist, um Schwingungen auf das Abdeckglas anzuwenden, wobei der Schwingungswandler Folgendes beinhaltet
einen Wandlerrahmen (110),
eine Wandlerbasis (120), die mit dem Wandlerrahmen gekoppelt ist,
einen verlängerten Sockel (130), der mit der Wandlerbasis gekoppelt ist,
wobei der verlängerte Sockel die Wandlerbasis und den Wandlerrahmen von dem Abdeckglas anhebt und wobei der verlängerte Sockel neben der LCD angeordnet ist, sodass sich wenigstens ein Abschnitt des Wandlerrahmens und/oder der Wandlerbasis über die LCD und/oder die Berührungssensorkomponente hinaus erstreckt;
ein äußeres Gehäuse (210), mit dem das Abdeckglas gekoppelt ist; und
eine erste Stützwand (310), die mit dem äußeren Gehäuse gekoppelt ist,
eine zweite Stützwand (320), die mit dem äußeren Gehäuse verbunden ist;
wobei wenigstens ein Abschnitt der ersten Stützwand auf einer ersten Seite des Schwingungswandlers positioniert ist und wenigstens ein Abschnitt der zweiten Stützwand auf einer zweiten Seite des Schwingungswandlers positioniert ist; und
wobei die erste Stützwand und die zweite Stützwand die Verschiebung des Schwingungswandlers im Falle einer Impulslast auf der Rechenvorrichtung begrenzen.

2. Rechenvorrichtung nach Anspruch 1, wobei der verlängerte Sockel den Wandlerrahmen wenigstens 5 mm von dem Abdeckglas anhebt.

3. Rechenvorrichtung nach Anspruch 1, wobei der verlängerte Sockel den Wandlerrahmen wenigstens 10 mm von dem Abdeckglas anhebt.

4. Rechenvorrichtung nach Anspruch 1, wobei der verlängerte Sockel neben der LCD und der Berührungssensorkomponente positioniert ist, sodass sich wenigstens ein Abschnitt des Wandlerrahmens über die Berührungssensorkomponente und die LCD erstreckt.

5. Rechenvorrichtung nach Anspruch 1, wobei die Anhebung des Wandlerrahmens von dem Abdeckglas einen minimalen Rahmenversatz für den Schwingungswandler überschreitet.

6. Rechenvorrichtung nach Anspruch 1, wobei die erste Stützwand und die zweite Stützwand den Schwingungswandler nicht berühren.

7. Rechenvorrichtung nach Anspruch 1, wobei die Schwingungen taktile Schwingungen und/oder hörbare Schwingungen umfassen.

## Revendications

1. Dispositif informatique (200) comprenant :
un verre de protection (220);
un composant de capteur tactile (240) couplé au verre de protection ;
un écran à cristaux liquides « LCD » (250) couplé au composant de capteur tactile ; et
un transducteur de vibration (100) couplé au verre de protection pour appliquer des vibrations au verre de protection, le transducteur de vibration incluant
un cadre de transducteur (110),
une base de transducteur (120) couplée au cadre de transducteur,
un socle étendu (130) couplé à la base de transducteur,
le socle étendu élevant la base de transducteur et le cadre de transducteur du verre de protection, et le socle étendu étant positionné de manière adjacente à l'écran LCD de sorte qu'au moins une partie du cadre de transducteur et/ou de la base de transducteur s'étend sur l'écran LCD et/ou ou le composant de capteur tactile ;
un boîtier externe (210) auquel le verre de protection est couplé ; et
une première paroi de support (310) couplée au boîtier externe,
une seconde paroi de support (320) couplée au boîtier externe ;
au moins une partie de la première paroi de support étant positionnée sur un premier côté du transducteur de vibration, et
au moins une partie de la seconde paroi de support étant positionnée sur un second côté du transducteur de vibration ; et
la première paroi de support et la seconde paroi de support limitant le déplacement du transducteur de vibration en cas de charge impulsionnelle sur le dispositif informatique.

2. Dispositif informatique selon la revendication 1, dans lequel le socle étendu élève le cadre de transducteur à au moins 5 mm du verre de protection.

3. Dispositif informatique selon la revendication 1, dans lequel le socle étendu élève le cadre de transducteur à au moins 10 mm du verre de protection.

4. Dispositif informatique selon la revendication 1, dans lequel le socle étendu est positionné de manière adjacente à l'écran LCD et au composant de capteur tactile de sorte qu'au moins une partie du cadre de transducteur s'étend sur le composant de capteur tactile et l'écran LCD.

5. Dispositif informatique selon la revendication 1, dans lequel l'élévation du cadre de transducteur par rapport au verre de protection dépasse un décalage de cadre minimal pour le transducteur de vibration.

6. Dispositif informatique selon la revendication 1, dans lequel la première paroi de support et la seconde paroi de support ne sont pas en contact avec le transducteur de vibration.

7. Dispositif informatique selon la revendication 1, dans lequel les vibrations comprennent au moins l'une des vibrations tactiles et des vibrations audibles.
